# EUROPEAN PATENT SPECIFICATION

(11) **EP 3 277 498 B1**
(45) Date of publication and mention of the grant of the patent: **11.11.2020**
(21) Application number: 16774278.2
(22) Date of filing: 01.04.2016
(51) Int. Cl.: C09D 127/18, B05D 5/08, B05D 3/02, B05D 7/14, C08K 3/22

(54) **MULTILAYER ARTICLES COMPRISING A RELEASE SURFACE AND METHODS THEREOF**
MEHRSCHICHTIGE ARTIKEL MIT EINER TRENNOBERFLÄCHE UND VERFAHREN DAFÜR
ARTICLES MULTICOUCHES COMPRENANT UNE SURFACE ANTI-ADHÉSIVE ET PROCÉDÉS ASSOCIÉS

(30) Priority: 01.04.2015 US 201562141334 P
(43) Date of publication of application: 07.02.2018
(73) Proprietor: 3M Innovative Properties Company, St. Paul, MN 55133-3427 (US)
(72) Inventor: DADALAS, Michael C., 41453 Neuss (DE); DOEBERT, Philipp, 82229 Seefeld (DE); GUGGENBERGER, Rainer, 82229 Seefeld (DE); HINTZER, Klaus, 41453 Neuss (DE); ZIPPLIES, Tilman C., 41453 Neuss (DE)
(74) Representative: Hettstedt, Stephan
(86) International application number: PCT/US2016/025465
(87) International publication number: WO 2016/161233

(56) References cited:
- US-A- 3 473 952
- US-A1- 2002 150 778
- US-A1- 2003 129 400
- US-A1- 2006 110 601
- US-A1- 2006 234 063
- US-A1- 2012 034 448
- US-A1- 2013 059 101

## Description

### TECHNICAL FIELD

A multilayer article comprising a fluoropolymer release coating, which minimizes sticking, is described along with methods of making such an article.

### BACKGROUND

Fluorinated polymers such as polymers of tetrafluoroethylene (TFE) are well known for their superior heat resistance, chemical resistance, corrosion resistance, and anti-stick properties. Because of these properties, polymers of TFE have found a wide range of applications including use as release (also called non-stick) coatings on metal substrates such as cookware including cook, bake, and frying articles.

It is known that the adhesion of fluoropolymers to metal is rather low, so in the fabrication of such cookware it is customary to apply a primer composition to the metal before applying the fluoropolymer topcoat to improve adhesion of the topcoat fluorinated polymer layer to the metal substrate.

A non-fluorinated heat resistant binder is known for use in non-stick finishes for adhering fluoropolymers to substrates and for film-forming. The binder can be non-melt processible (meaning it does not exhibit melt-flow behavior) such as polyimides, polyamides, polybenzimidazoles, polyamide-imides, polysulfones, polybismaleimides, and liquid crystal polymers; or melt processible, such as polyethersulfone, polyphenylene sulfide, and polyaryleneeetherketone. U.S. Pat. No. 7,597,939 (Hennessey) teaches a primer powder composition comprising a tetrafluoroethylene/perfluoroolefin copolymer and a non-melt processible binder. US 2006/234063 A1 teaches a fluororesin coating film and a product containing such coating film, wherein the fluororesin coating film comprises at least two layers formed on a metal substrate.
US 2013/059101 A1 teaches a melt processible semicrystalline fluoropolymer used in multilayer articles having repeating units arising from tetrafluoroethylene and a hydrocarbon monomer having a functional group and a polymerizable carbon-carbon double bond.
US 2002/150778 A1 teaches a multilayer non-stick coating system including a primer which has excellent adhesion to a smooth metal substrate. Said primer includes a binder resin comprising at least one of polyamideimide, polyamide, and polyimide dissolved in a solvent and then blended with an aqueous dispersion of a fluoropolymer resin including a copolymer having tetrafluoroethylene, hexafluoropropylene, and vinylidene fluoride monomers and a filler material.

### BRIEF DESCRIPTION OF DRAWINGS

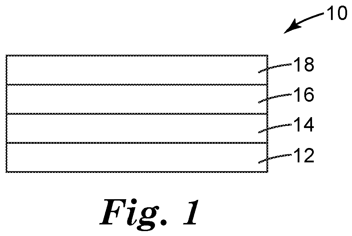

Fig. 1 is an exemplary embodiment of a release coated substrate of the present disclosure.

### SUMMARY

There is a desire for an alternative method of making a primer layer for multilayer articles having a release surface, wherein the primer layer is a thin layer, formed without the use of solvents, and is substantially free of binding materials.

In one aspect, a multilayer article is described comprising:
(a) metal substrate;
(b) a first fluoropolymer layer having a thickness no more than 10 micrometers, wherein the first fluoropolymer layer consists essentially of a fluoropolymer comprising reactive groups, wherein when the fluoropolymer is a melt-processible fluoropolymer it comprises at least 30 reactive groups per 1,000,000 carbon atoms and when the fluoropolymer is a non-melt processible fluoropolymer it comprises more than 5 reactive groups per 1,000,000 carbon atoms; and
(c) a second fluoropolymer layer having a thickness of about 10 to 1000 micrometers,
wherein the first fluoropolymer layer is in contact with both the metal substrate and the second fluoropolymer layer, and wherein the fluoropolymer of the first fluoropolymer layer is selected from perfluorinated fluoropolymers and from partially fluorinated fluoropolymers wherein the partially fluorinated fluoropolymers are selected from copolymers of tetrafluoroethylene (TFE) and ethylene (E), polyvinylidene fluoride (PVDF) and THV (tetrafluoroethylene-hexafluoropropylene-vinylidene fluoride copolymers).

In another aspect, a process for forming a release surface on a substrate is described the process comprising:
delivering particles from at least one fluid jet to a metal surface to impregnate the metal surface with the fluoropolymer to form a first fluoropolymer layer, wherein the particles comprise an abrasive particle and a fluoropolymer;
coating the first fluoropolymer layer with a second fluoropolymer to form a second fluoropolymer layer and thereby forming a multilayered article; and
sintering the multilayered article to from a release surface coated substrate; wherein when the fluoropolymer of the first fluoropolymer layer is a melt-processible fluoropolymer it comprises at least 30 reactive groups per 1,000,000 carbon atoms and when the fluoropolymer of the first fluoropolymer layer is a non-melt processible fluoropolymer it comprises more than 5 reactive groups per 1,000,000 carbon atoms and wherein the fluoropolymer of the first fluoropolymer layer is selected from perfluorinated fluoropolymers and from partially fluorinated fluoropolymers wherein the partially fluorinated fluoropolymers are selected from copolymers of tetrafluoroethylene (TFE) and ethylene (E), polyvinylidene fluoride (PVDF) and THV (tetrafluoroethylene-hexafluoropropylene-vinylidene fluoride copolymers).

The above summary is not intended to describe each embodiment. The details of one or more embodiments of the invention are also set forth in the description below. Other features, objects, and advantages will be apparent from the description and from the claims.

### DETAILED DESCRIPTION

As used herein, the term
"a", "an", and "the" are used interchangeably and mean one or more; and
"and/or" is used to indicate one or both stated cases may occur, for example A and/or B includes, (A and B) and (A or B).

Also herein, recitation of ranges by endpoints includes all numbers subsumed within that range (e.g., 1 to 10 includes 1.4, 1.9, 2.33, 5.75, 9.98, etc.).

Also herein, recitation of "at least one" includes all numbers of one and greater (e.g., at least 2, at least 4, at least 6, at least 8, at least 10, at least 25, at least 50, at least 100, etc.).

Shown in Fig. 1 is an exemplary embodiment of a multilayered article of the present invention. Release coated substrate 10, comprises a first fluoropolymer layer (primer layer) 14, which is sandwiched between metal substrate 12 and a second fluoropolymer layer 16. The first fluoropolymer layer 14 is in direct contact with metal substrate 12 and second fluoropolymer layer 16, wherein the first fluoropolymer layer 14 contacts metal substrate 12 and second fluoropolymer layer 16 without the use of an additional adhesive (or tie) layer. The multilayer article may comprise additional layers (e.g., layer 18) on top the second fluoropolymer layer 16, opposite the first fluoropolymer layer 12.

The metal substrates of the present disclosure include those substrates typically found useful in cookware articles such as metals selected from carbon steel (e.g., high-carbon steel, stainless steel, aluminized steel), stainless steel, aluminum, aluminum alloys, and combinations thereof.

First fluoropolymer layer 14 is positioned between the metal substrate and the second fluoropolymer layer and is used to attach the second fluoropolymer layer 16 to the metal substrate 12. To form strong adhesion between the metal substrate and the second fluoropolymer layer, it is advantageous for the first fluoropolymer layer to continuously contact both the metal substrate and the second fluoropolymer layer.

The first fluoropolymer layer comprises a fluoropolymer. The fluoropolymer is perfluorinated (i.e., contains fluorine-carbon bonds and no hydrogen-carbon bonds along the polymer backbone) or partially fluorinated (i.e., contains both fluorine-carbon bonds and hydrogen-carbon bonds along the polymer backbone). In one embodiment, the first fluoropolymer layer comprises a melt-flowable fluoropolymer, wherein the fluoropolymer is a copolymer. In one embodiment, the fluoropolymer is derived from copolymers of tetrafluoroethylene (TFE) and perfluoroolefins having 3 to 8 carbon atoms such as HFP (hexafluoropropylene); copolymers of TFE and PAVE (perfluoro(alkyl vinyl ethers)), wherein the PAVE are linear or branched having 1 to 5 carbon atoms (for example PMVE (perfluoro(methyl vinyl ether)), PEVE (perfluoro(ethylvinyl ether)), PPVE (perfluoro(propylvinyl ether))); and combinations thereof. In one embodiment, TFE copolymers include ETFE (ethylene-tetrafluoroethylene), PFA (TFE/PAVE copolymer), TFE/HFP/PAVE wherein PAVE is PEVE and/or PPVE, and MFA (TFE/PMVE/PAVE wherein the alkyl group of PAVE has at least 2 carbon atoms). In one embodiment, the fluoropolymer is derived from monomers selected from vinylidene fluoride (VDF) such as polyvinylidene fluoride (PVDF), and THV (tetrafluoroethylene-hexafluoropropylene-vinylidene fluoride copolymer).

The fluoropolymer of the first fluoropolymer layer of the present disclosure also comprises reactive groups. Such reactive groups include:
(A)- COX groups wherein X is OH, ONa, OK, NH₂, F, or Cl;
(B)- S(=O)₂X groups wherein X is OH, ONa, OK, NH₂, F, or Cl;
(C)- CH₂OSO₂Y (sulfate) groups wherein Y= OH, ONa, or OK;
(D)- CH₂OH groups; and
(E)- phosphate groups such as -PO₃⁻ and -OPO₃⁻.

The reactive groups (A)-(E) are terminal groups located at the ends of the fluoropolymer chains or on a side chain along the main carbon backbone of the fluoropolymer. Typically, the fluoropolymer comprises at least 2, 3, 5, 10, 50, 100, 500, or even 1000; and at most 5000, 7000, or even 10000 of these groups per 1 million carbon atoms.

These reactive groups can be introduced into the fluoropolymer during its polymerization (e.g., aqueous emulsion polymerization) and/or through the use of particular monomers, initiators, chain transfer agents, etc. Exemplary introduction of these reactive groups is disclosed further below.

The terminal (A) groups can be formed through the use of a radical forming initiator such as persulfate, such as ammonium or potassium persulfate, or a permanganate such as potassium permanganate. Disclosed herein, the fluoropolymer may comprise the terminal (A) groups because it is polymerized with monomers comprising the -COX groups or groups that can be converted into the -COX groups (e.g., nitrile groups). Disclosed herein are which include functionalized vinyl ethers or maleic anhydride. Alternatively or additionally, the terminal (A) groups may be formed when a chain transfer agent comprising a -COX group is used during the polymerization. The fluoropolymers comprising the terminal (A) groups can be determined by FT-IR using the method as described in columns 4 and 5 of U.S. Pat. No. 4,743,658 (Imbalzano et al.).

The terminal (B) groups can be formed through the use of persulfate/sulfite initiator systems. For example -SO₃⁻ groups can be favored based on the ratio of persulfate/sulfite used. In one embodiment, -SO₃⁻ groups are present along with -COX groups. Disclosed herein, the fluoropolymer may comprise the terminal (B) groups because it is polymerized with monomers comprising -S(=O)₂X groups. Alternatively or additionally, the terminal (B) groups may be formed when a chain transfer agent comprising a -S(=O)₂X group is used during the polymerization.

The terminal (C) groups can be formed through the use of a persulfate initiator, such as ammonium or potassium persulfate.

The fluoropolymer may comprise the terminal (E) groups when the fluoropolymer is polymerized with monomers containing these phosphate groups. The monomers may be non-fluorinated or fluorinated.

In one embodiment, the fluoropolymer is a particle comprising a core-shell structure with respect to the reactive groups, wherein the particle comprises more reactive groups at the surface of the particle as compared to the center of the particle. Such constructions can occur in thermoplast materials and PTFE-type materials.

Exemplary types of fluoropolymers for use in the first fluoropolymer layer include:
(I) Non-melt processible, fluoropolymer material such as non-melt procesible PTFE. Non-melt processible PTFE materials having a standard specific gravity (SSG) of around 2.20 to 2.14 g/cm³ as measured according to ASTM 4895-10. In one embodiment, these non-melt processible fluoropolymer comprise more than 5, 10, 20, 30, 50, or even 100 reactive groups per 1,000,000 carbon atoms. In one embodiment, the non-melt processible PTFE materials is part of a core-shell particle, wherein the outer shell is a non-melt processible PTFE having groups (A) or (B) present in their outer shell, wherein the shell comprises no more than about 10% or even 1% by weight of the particle.
(II) Melt processible flouropolymers as further described below. In one embodiment, these melt processible fluoropolymer materials comprise at least 30, 50, 100, 150, 200, or even 250 reactive groups per 1,000,000 carbon atoms.
(IIA) Melt processible PTFE materials. Such melt processible PTFE materials include, for example, a micropowder having a melt flow index (MFI) at 372°C /5 kg of 0.001 to 1000 g/10 min and having more than 50, preferably more than 200 of at least one of groups (A)-(D) per million carbon atoms.
(IIB) Perfluorinated thermoplasts such as PFA or FEP copolymers. PFA is a melt processible polymer comprising TFE and a perfluoroalkyl vinyl ether, which can be modified with HFP and/or perfluorinated vinyl ethers. These PFA polymers have a melting point from 270 to 315°C and a MFI at 372°C /5 kg of 0.1 to 1000 g/10 min. FEP is a melt processible polymer comprising TFE and HFP. In some embodiments, the FEP polymer may be modified with up to 3 wt% of a vinyl ether. These FEP polymers have a melting point from 200 to 280°C and a MFI at 372°C /5 kg of 0.1 to 100 g/10 min. In one embodiment, the perfluorinated thermoplasts is a PFA or FEP having more than 10, preferably more than 100 of at least one of groups (A)-(D) per million carbon atoms
(IIC) Partially fluorinated thermoplasts such as THV or ETFE.

Depending on the initiator system used for polymerization, these polymers may comprise -COX groups, -CH₂OH, and/or CH₂-O-SO₂Y terminal groups. These ETFE have a melting point from 180 to 280°C and a MFI at 297°C /5 kg of 0.01 to 1000 g/10 min. The THV polymers have a melting point of 100 - 250 °C and a MFI at 265°C/5kg of 0.01 - 1000 g/10min. Other partially fluorinated thermoplast material include PVDF.

In addition to the fluoropolymer described above, the first fluoropolymer layer may further comprise inorganic materials such as carbon black; oxides such as titanium dioxide, silicon dioxide, and magnesium oxide; nitrides such as boron nitride, and silicon nitride; carbides such as silicium carbide; phosphate salts such as sodium, calcium, potassium, and magnesium salts; fluorides such as fluorspar and kryolith; tetralkyl ammonium salts; hydroxyl apatite; and combinations thereof.

The first fluoropolymer layer as disclosed herein is substantially free of a binder, meaning that the first fluoropolymer layer comprises less than 0.1, 0.05, or even 0.01% by polymer weight or even no non-fluorinated polymer (wherein the non-fluorinated polymer is a compound having a molecular weight of at least 1000 g/mol and/or a sufficient boiling point so that it is not decomposed or evaporated during the baking and/or sintering of the release coated article).

As will be described below, a solventless process can be used to make thin layers of the first fluoropolymer layer. In the present disclosure, the first fluoropolymer layer has a thickness of at least 0.5 micrometers and no more than 5, 6, 8, 9, or even 10 micrometers.

The second fluoropolymer layer 16 is a durable fluoropolymer layer used to provide an easy release coating to the underlying metal substrate. Such durable fluoropolymer layers comprise a fluoropolymer such as: polytetrafluoroethylene, or copolymers of tetrafluoroethylene with a perfluorinated monomer. Exemplary perfluorinated monomers include: perfluorinated vinyl ether such PMVE, PEVE, and perfluoro n-propyl vinyl ether (PPVE-1), perfluoro-2-propoxypropylvinyl ether (PPVE-2), perfluoro-3-methoxy-n-propylvinyl ether and perfluoro-2-methoxy-ethylvinyl ether; or a perfluorinated C3 to C8 olefin, such as, for example, HFP. The term 'perfluorinated monomer' as used in connection with the present disclosure not only includes monomers consisting of carbon and fluorine atoms, but also includes monomers in which some of the fluorine atoms are replaced by chlorine or bromine such as for example in chlorotrifluoroethylene. Nevertheless, a perfluorinated monomer as used herein does not have carbon-hydrogen bonds in the molecule.

In one embodiment, the second fluoropolymer layer comprises a non-melt processible fluoropolymers. By the term 'non-melt processible' is meant that the melt viscosity of the homo-or copolymer of TFE is so high that conventional melt processing equipment cannot be used to process the polymer. This means in general that the melt viscosity is at least 10¹⁰ Pascal·seconds. In one embodiment, the second fluoropolymer layer comprises at least 1, 2, 4, 5, or even 10%; and at most 75, 80, 90, 95, 99, or even 100% by weight of a non-melt processible polymer based on the total weight of the polymer.

In one embodiment, the second fluoropolymer layer may comprise a perfluorinated melt-processible fluoropolymer such as e.g., a copolymer of TFE that is melt-processible. Examples of such copolymers include FEP or PFA polymers. In one embodiment, the second fluoropolymer layer comprises at least 1, 2, 4, 5, or even 10%; and at most 75, 80, 90, 95, 99, or even 100% by weight of a melt-processible polymer based on the total weight of the polymer.

Typically, the second fluoropolymer layer comprises additives to improve, for example, the durability, scratch resistance, and/or aesthetics of the layer. Exemplary additives include, colloidal silica, mica, fillers (such as carbon black, silicium nitride, boronitride, titanium carbonitride, etc.), coloring agents, levelling agents, adhesion promoters and tackifiers. The composition may further include in particular film hardeners as disclosed in WO 96/13556 (Tannenbaum). Examples of film hardeners include silicate compounds, such as metal silicates e.g. aluminium silicate, and metal oxides such as titanium dioxide, and aluminium oxide, and carbides such as silicium carbide. Typically, these additives are added in the second fluoropolymer layer in a weight % of no more than 1, 2, 5, 8 or even 10%.

Typically the second fluoropolymer layer has a thickness of at least 10, 20, 25, 50, 75, or even 100 micrometer; and at most 500, 600, 800, or even 1000 micrometers.

In one embodiment, second fluoropolymer layer is the topcoat layer. In another embodiment, second fluoropolymer layer 16 is an intermediate layer and thus, the multilayer article comprise additional layer 18. Additional layer 18 may include those layers known in the art, to enhance the properties and/or performance of the multilayer article, such as chemical resistance, smoothness, or gloss. For example, additional layer 18 may be a topcoat layer substantially comprising PTFE, in other words comprising no more than 5%, or even 1% by weight of a non-PTFE polymer. In another embodiment, additional layer 18 is a fluorothermoplast polymer layer substantially comprising PFA or FEP in other words comprising no more than 5%, or even 1% by weight of a non-PFA or non-FEP polymer.

Although Fig. 1 depicts a multilayer article comprising three layers, the multilayer article of the present disclosure may comprise multiple layers to achieve the release coating. For example a gradient of layers can be used, for example, wherein the fluoropolymer composition gradually changes as one moves from the metal substrate to the outermost layer.

The present disclosure provides a method for making multilayered articles, wherein the primer layer is formed by bombarding a metal substrate with abrasive particles and a fluoropolymer so as to impregnate the metal surface with the fluoropolymer forming the first fluoropolymer layer. This process can generate thin layers of the first fluoropolymer layer onto a metal substrate and in the absence of solvents. Furthermore, this layer can be made without the use of non-fluorinated polymers, which may be advantageous because non-fluorinated polymer tend to be less thermally stable then their fluorinated counterparts, and may discolor and/or degrade.

In the present disclosure, the metal substrate may be smooth or roughened. In one embodiment, the metal substrate is treated before use. The metal substrate may be chemically treated (e.g., chemical cleaning, etching, etc.) or abrasively treated (e.g., grit blasting, microblasting, water jet blasting, shot peening, ablation, or milling) to clean or roughen the surface prior to use. Because the presently disclosed method comprises abrasively treating the metal surface during the application of the fluoropolymer, advantageously, in one embodiment, the metal substrate is not treated prior to use.

In one embodiment, the metal substrate's surface is treated with abrasive particles such that the substrate's surface becomes partially coated (for example less than 90, 80, 75, 50, or even 25%) with silicon dioxide. The silicon dioxide containing surface can be further modified, for example with silanes prior to the coating of the first fluoropolymer layer. Such treatment is described in U.S. Pat. Nos. 5,024,711 (Gasser et al.) and 5,185,184 (Koran et al.)). This pretreatment method can provide a durable layer with strong adhesive strength.

The first fluoropolymer layer of the present disclosure is provided through treating the metal substrate by impacting the surface of the metal substrate simultaneously with abrasive particles and a fluoropolymer, and optionally in the presence of additives such as inorganic salts. Conventional surface bombardment techniques such as grit blasting, sand blasting, or shot peening can be used.

The abrasive impact should be conducted with sufficient energy (abrasive particle having sufficient size, and hardness) to either roughen the metal surface and/or breech the oxide layer, allowing a window of opportunity for the fluoropolymer to be taken up by or incorporated into the metal substrate before the oxide layer reforms around it.

In one embodiment, the abrasive particle has a particle size ranging from 0.1 µm to 10000 µm, such as a particle size ranging from 1 µm to 5000 µm, or a particle size ranging from 10 µm to 1000 µm.

In one embodiment, the abrasive particle has a Mohs hardness ranging from 3 to 10, such as a Mohs hardness ranging from 4 to 10, or a Mohs hardness ranging from 5 to 10.

Exemplary abrasive particles include, but are not limited to, shot or grit made from silica, alumina, zirconia, barium titanate, calcium titanate, sodium titanate, titanium oxide, glass, biocompatible glass, diamond, silicon carbide, calcium phosphate, calcium carbonate, metallic powders, titanium, stainless steel, hardened steel, carbon steel chromium alloys or any combination thereof.

The fluoropolymer delivered simultaneously with the abrasive particles is the fluoropolymer of the first fluoropolymer layer described above.

In one embodiment, the surface of the metal substrate is bombarded with both abrasive particles and fluoropolymer particles. Typically, the weight ratio of abrasive particles to fluoropolymer particles is from 1:1 to 100000:1.

In another embodiment, the surface of the metal substrate is bombarded with abrasive particles comprising a superficial layer of fluoropolymer. In this embodiment, an abrasive particle core comprises an outer layer of the fluoropolymer. In one embodiment the outer surface of the abrasive particle is substantially covered with fluoropolymer, for example, at least 75, 80, 90, 95 or even 100% of the abrasive particles surface is covered with a fluoropolymer. In another embodiment the outer surface of the abrasive particle is partially covered with the fluoropolymer, e.g., less than 90, 80, 70 or even less than 30% covered.

The abrasive particles and fluoropolymer are impacted onto the surface of the metal substrate using pressure from a fluid jet. Gaseous carrier fluids such as nitrogen, argon, carbon dioxide, helium, air, and combinations thereof, can be used to deliver the abrasive particles and the fluoropolymer. In the present disclosure, the process is conducted in the absence of liquids, which can be advantageous from a cost perspective. For example, there is no need for drying and venting steps required with liquid coatings and no volatile organic solvents are used.

The pressure of the fluid jet will also be a factor in determining the impact energy of the abrasive particles. If using abrasive particles and fluoropolymer particles, the particles do not have to be delivered to the surface of the metal substrate through the same jet. More than one fluid jet could be used as long as the abrasive particles and the fluoropolymer particles are delivered to the surface at the substantially the same time. In one embodiment, the fluoropolymer particles and abrasive particles are contained in the same reservoir and are delivered to the metal surface from the same jet (nozzle). In another embodiment, the fluoropolymer particles are contained in one reservoir and abrasive particles are contained in a separate reservoir, and multiple nozzles deliver the fluoropolymer and abrasive particles. The multiple nozzles can take the form of a jet within a jet, i.e., the particles from each jet bombard the surface at the same incident angle. In another embodiment, the multiple nozzles are spatially separated so as to bombard the surface at different incident angles yet hit the same spot on the surface simultaneously.

In one embodiment, the at least one fluid jet is selected from dry shot peening machines, dry blasters, wheel abraders, grit blaster(s), sand blasters(s), and micro-blasters. In one embodiment, the at least one fluid jet operates at a pressure ranging from 0.5 to 100 bar, such as a pressure ranging from 1 to 30 bar, or a pressure ranging from 3 to 10 bar.

In other embodiments, blasting equipment can be used in conjunction with controlled motion such as CNC or robotic control.

One of ordinary skill in the art can appreciate the effect of the size, shape, and hardness of the abrasive material used on the extent of impregnation of the fluoropolymer in the surface using these mixed media.

One of ordinary skill in the art can appreciate the effect of the fluid stream itself, the blasting equipment using a gas medium (typically air) and the effects of using inert gases as a carrier fluid e.g. N₂ or noble gases such as Ar and He on the extent of impregnation of the fluoropolymer in the surface.

After bombarding the surface with the abrasive particles and fluoropolymer to form the first fluoropolymer layer, the first fluoropolymer layer optionally can be sintered and/or baked prior to the application of the second fluoropolymer layer. In one embodiment, it is believed that the blasting of the metal surface with the abrasive particles may cause sufficient localized heating to melt a melt-processible fluoropolymer.

In the present disclosure, the first fluoropolymer layer is in direct contact with the metal substrate, meaning that the first fluoropolymer layer contacts at least 10, 20, 50, 75, 80, 90, 95, or even 100% of the surface of the metal substrate.

In one embodiment, the surface of the metal substrate is treated for a sufficient time to produce a continuous first fluoropolymer layer having a thickness of at least 0.5 micrometers and no more than 5, 6, 8, 9, or even 10 micrometers.

Although not wanting to be bound by theory, it is believed that the abrasion of the particles on the metal substrate provides some roughening of the substrate surface, which may result in the fluoropolymer coating being bound mechanically to the substrate. Alternatively or additionally, is also believed that the reactive groups of the fluoropolymer in the first fluoropolymer layer interact with the metal substrate, forming a chemical bonding to the substrate.

After forming the first fluoropolymer layer, the second fluoropolymer layer can be applied directly onto the first fluoropolymer layer using techniques known in the art, for example, using a powder coating or as an dispersion. For example, the second fluoropolymer layer can be applied in the form of an aqueous dispersion, wherein the fluoropolymer latex and optional additives are blended together and then coated onto the first fluoropolymer layer. Alternatively, the fluoropolymer particles and optional additive are dry blended together and coated onto the first fluoropolymer layer.

The second fluoropolymer layer composition may be applied by any of the known techniques to apply coatings to substrates including for example spray coating, roller coating, curtain coating, or coil coating the composition.

Following application of the second fluoropolymer layer composition, the multilayeredarticle is generally dried by subjecting the article to elevated temperature of 100 to 300°C. One or more additional layers of non-melt processible PTFE may be then be provided in a similar way. Such one or more layers of PTFE may or may not comprise melt-processible fluoropolymers such as melt-processible copolymers of TFE. When such melt-processible TFE copolymers are used, the ratio thereof may be varied in a multi-layer coating so as to create a gradient of increasing amount of PTFE towards the top coating. Like-wise, the ratio of the non-fluorinated polymer to the PTFE particles may be varied to create a gradient of decreasing amount of non-fluorinated polymer towards the top coating.

Following application of the one or more coatings, the obtained multi-layered article (comprising the first fluoropolymer layer and the second fluoropolymer layer) is sintered (i.e., processed above the melting temperature of the highest melting fluoropolymer). Generally, sintering is carried out in an oven at a temperature of 350°C to 450°C, typically from 370°C to 420°C. The sintering time may vary from 1 to 10 min. and the oven may have a constant temperature or an increasing temperature profile may be used, i.e. the temperature may be increased from an initial lower temperature to a higher temperature later in the baking cycle. Generally, processing of the multilayered article is carried out by conveying the coated article through an oven with an increasing temperature profile from entrance to exit.

The multilayer article described above, wherein the metal substrate includes at least one of steel, high-carbon steel, stainless steel, aluminized steel, aluminum, and aluminum alloys.

The process as described above, wherein the abrasive particle is selected from silica, alumina, zirconia, barium titanate, calcium titanate, sodium titanate, titanium oxide, glass, biocompatible glass, diamond, silicon carbide, calcium phosphate, calcium carbonate, metallic powders, carbon fiber composites, polymeric composites, titanium, stainless steel, hardened steel, carbon steel chromium alloys, or any combination thereof.

### EXAMPLES

Advantages and embodiments of this disclosure are further illustrated by the following examples, but the particular materials and amounts thereof recited in these examples, as well as other conditions and details, should not be construed to unduly limit this invention. In these examples, all percentages, proportions and ratios are by weight unless otherwise indicated.

All materials are commercially available, for example from Sigma-Aldrich Chemical Company; Milwaukee, WI, or known to those skilled in the art unless otherwise stated or apparent.

These abbreviations are used in the following examples: g= gram, min = minute, mm = millimeter, and wt = weight.

**Materials Table**

| Name | Source |
|---|---|
| Abrasive particle | 110 micrometer special high-purity aluminum oxide, available under the trade designation "ROCATEC-PRE SANDBLASTING MATERIAL" 3M Co., St. Paul, MN |
| Fluoropolymer 1 | A melt-processible PTFE micropowder available under the trade designation "DYNEON TF 9207 Z PTFE" available from 3M Co., St. Paul, MN. The PTFE comprises about 20-25 carboxylic acid groups per million carbon atoms. |
| Fluoropolymer 2 | An aqueous thermoplastic polymer dispersion of tetrafluoroethylene-perfluor(propyl vinyl ether) copolymer, comprising about 50% solids and about 7 % by weight of emulsifier. The thermoplastic polymer has a melting point of 310°C and about 265 carboxylic acid end groups per million carbon atoms. |
| Topcoat | A PTFE dispersion containing additives available under the trade designation "Greblon™ Antistic Topcoat Concentrate (available from Weilburger Lackfabrik J. Grebe GmbH). |

### Cross Hatch Test

The adhesion of the coatings to the substrate was evaluated using the crosshatch test, in accordance with DIN EN ISO 2409. A crosshatch pattern of 1 mm was made in the coated substrates by using a knife. Adhesive tape (50 mm, available under the trade designation "TESA 4104" from Tesa SE, Hamburg, Germany) was applied as firmly as possible onto the cut lines. The adhesive tape was pulled vertically. After the tape was applied and pulled for 10 times, the appearance of the cut lines was evaluated according to DIN EN ISO 2409 (0 = superior; 5 = bad coating).

### Endgroup Analysis

The number of carboxylic acid end groups per million carbon atoms of the fluoropolymers used was measured similar to the method described in U.S. Pat. No. 4,743,658 (Imbalzano et al.). The carboxylic acid end groups analyzed include carbonyl groups including carboxylic acid (COOH), carboxylate (COO⁻), carboxylic acid fluoride (COF), and carboxamides (CONH₂). Sample material, which were thin films of fluoropolymer approximately 0.10 mm, were scanned on a Fourier-transform infrared spectrometer (available under the trade designation "NICOLET 510 FT-IR SPECTROPHOTOMER" from Thermo Electron Corp., Madison, WI). 16 scans were collected before the transform was performed, all other operational settings used were those provided as default settings in the system software. Similarly, a film of a reference material known to have none of the end groups to be analyzed was scanned. The reference absorbance spectrum was subtracted from the sample absorbance spectrum using the interactive subtraction mode of the software to obtain a difference spectrum. The CF₂ overtone band at 2365 cm⁻¹ was used to compensate for thickness differences between sample and reference films during the interactive subtraction. The difference spectrum represents the absorbances due to non-perfluorinated polymer end groups. The calibration factor (CF) used to calculate the numbers of carboxylic acid end groups per million carbon atoms was 440 for the absorbance at 3560 cm⁻¹. The number of end groups per million carbon atoms was determined using the equation: carboxylic acid end groups per 1 million carbon atoms = absorbance × CF/film thickness of the sample material (in mm).

### Cross-sectional Thickness Measurement

The cross-section thickness of the primer layer was tested using a coating thickness gauge (Mini Test 3100 available as from ElektroPhysik, Köln, Germany) with a non-ferrous sensor. The gauge was calibrated with a non-coated aluminum plate to establish zero thickness. About 5 points from the middle portion of the coated aluminum plates (Comparative Example and Example 1) were measured and the average was reported as the thickness of the primer layer.

### Comparative Example

600g of abrasive particle was combined with 12g of Fluoropolymer 1 and mixed in a tumbling mixer for 6 hours to coat the abrasive particles with the fluoropolymer.

The surface of an aluminum plate, used as received, was treated with the abrasive particles coated with Fluoropolymer 1 (from above) to form a coated plate. The coated abrasive particles were sprayed through a single nozzle at the surface of the aluminum plate using a pressure of 3.0 bar. The distance from the nozzle tip to the surface of the aluminum plate was 1.75 mm. The aluminum plate was moved so that the nozzle rastered the surface over 4.5-5 mm. The cross-sectional thickness of the primer layer (first fluoropolymer layer) was less than 5 micrometers.

The coated plate was air brushed for a few seconds with about 2 bar of air pressure to remove any abrasive particles, dust, and/or unattached fluoropolymer. The Topcoat was applied to the fluoropolymer coated surface of the aluminum plate by spray application at a pressure of 2 bar, using a spray gun (model 96 spray gun, Binks, Glendale Heights, IL), so as to obtain a dry coating thickness of about 20 micrometers. The coated multilayer article was then heated in an oven at 280°C for 10 min to dry and then at 380°C for 10 min to sinter.

The multilayer article was then tested on the exposed fluoropolymer layer following the Cross Hatch Test and received an appearance of a 4.

### Example 1

The same process as described in Comparative Example above was followed to make the multilayer article, except that Fluoropolymer 2 was used instead of Fluoropolymer 1 and following then mixing in the tumbling mixer, the fluoropolymer coated particles were dried for 17.5 hours at 90°C, followed by 8 hours at 250°C and allowed to cool to room temperature. The amount of fluoropolymer on the abrasive particles was calculated to be 0.42 weight% and the cross-sectional thickness of the primer layer was less than 5 micrometers.

The multilayer article was tested on the exposed fluoropolymer layer following the Cross Hatch Test and received an appearance of a 0.

Foreseeable modifications and alterations of this invention will be apparent to those skilled in the art without departing from the scope and spirit of this invention. This invention should not be restricted to the embodiments that are set forth in this application for illustrative purposes.

## Claims

1. A multilayer article comprising:
(a) metal substrate;
(b) a first fluoropolymer layer having a thickness no more than 10 micrometers, wherein the first fluoropolymer layer consists essentially of a fluoropolymer comprising reactive groups, wherein when the fluoropolymer is a melt-processible fluoropolymer it comprises at least 30 reactive groups per 1,000,000 carbon atoms and when the fluoropolymer is a non-melt processible fluoropolymer it comprises more than 5 reactive groups per 1,000,000 carbon atoms; and
(c) a second fluoropolymer layer having a thickness of about 10 to 1000 micrometers,
wherein the first fluoropolymer layer is in contact with both the metal substrate and the second fluoropolymer layer and wherein the thickness is measured according to the Cross-sectional Thickness Measurement as disclosed in the Examples Section, wherein the number of reactive groups is measured according to the Endgroup analysis method disclosed in the specification, and wherein the fluoropolymer of the first fluoropolymer layer is selected from perfluorinated fluoropolymers and from partially fluorinated fluoropolymers wherein the partially fluorinated polymers are selected from copolymers of tetrafluoroethylene (TFE) and ethylene (E), polyvinylidene fluoride (PVDF) and THV (tetrafluoroethylene-hexafluoropropylene-vinylidene fluoride copolymers).

2. The multilayer article of claim 1, wherein the fluoropolymer of the first fluoropolymer layer comprises (a) -COX groups, wherein X is OH, ONa, OK, NH₂, F, or Cl; (b) - S(=O)₂X where X is OH, ONa, OK, NH₂, F, or Cl; (c) -CH₂OSO₂Y where Y= OH, ONa, or OK; (d) -CH₂OH; (e) phosphate group; and combinations thereof.

3. The multilayer article of any one of claims 1-2, wherein the fluoropolymer of the first of fluoropolymer layer is a fluorinated copolymer.

4. The multilayer article of any one of claims 1-2, wherein the fluoropolymer of the first fluoropolymer layer is a PTFE homopolymer.

5. A process for forming a release surface on a substrate the process comprising:
delivering particles from at least one fluid jet to a metal surface to impregnate the metal surface with a fluoropolymer to form a first fluoropolymer layer, wherein the particles comprise an abrasive particle and the fluoropolymer;
coating the first fluoropolymer layer with a second fluoropolymer to form a second fluoropolymer layer and thereby forming a multilayered article; and
sintering the multilayered article to form a release surface coated substrate; wherein when the fluoropolymer of the first fluoropolymer layer is a melt-processible fluoropolymer it comprises at least 30 reactive groups per 1,000,000 carbon atoms and when the fluoropolymer of the first fluoropolymer layer is a non-melt processible fluoropolymer it comprises more than 5 reactive groups per 1,000,000 carbon atoms, and wherein the fluoropolymer of the first fluoropolymer layer is selected from perfluorinated fluoropolymers and from partially fluorinated fluoropolymers wherein the partially fluorinated polymers are selected from copolymers of tetrafluoroethylene (TFE) and ethylene (E), polyvinylidene fluoride (PVDF) and THV (tetrafluoroethylene-hexafluoropropylene-vinylidene fluoride copolymer).

6. The process of claim 5, wherein the particles comprise an abrasive particle and a fluoropolymer particle.

7. The process of claim 5, wherein the particles comprise an abrasive particle having an outer surface comprising a fluoropolymer.

8. The process of any one of claims 5-7, wherein the particles are delivered to the metal surface with a gas.

9. The process of any one of claims 5-8, wherein the coating with the second fluoropolymer is a powder coating or a dispersion coating.

10. The multilayer article of any one of claims 1-4, wherein the metal substrate includes at least one of steel, high-carbon steel, stainless steel, aluminized steel, aluminum, and aluminum alloys.

11. The process of any one of claims 5-9, wherein the abrasive particle is selected from silica, alumina, zirconia, barium titanate, calcium titanate, sodium titanate, titanium oxide, glass, biocompatible glass, diamond, silicon carbide, calcium phosphate, calcium carbonate, metallic powders, carbon fiber composites, polymeric composites, titanium, stainless steel, hardened steel, carbon steel chromium alloys, or any combination thereof.

## Patentansprüche

1. Ein mehrschichtiger Artikel, umfassend:
(a) Metallsubstrat;
(b) eine erste Fluorpolymerschicht mit einer Dicke von nicht mehr als 10 Mikrometer, wobei die erste Fluorpolymerschicht im Wesentlichen aus einem Fluorpolymer besteht, das reaktive Gruppen umfasst, wobei das Fluorpolymer, wenn es ein schmelzverarbeitbares Fluorpolymer ist, mindestens 30 reaktive Gruppen pro 1.000.000 Kohlenstoffatome umfasst, und das Fluorpolymer, wenn es ein nicht schmelzverarbeitbares Fluorpolymer ist, mehr als 5 reaktive Gruppen pro 1.000.000 Kohlenstoffatome umfasst; und
(c) eine zweite Fluorpolymerschicht mit einer Dicke von etwa 10 bis 1000 Mikrometer,
wobei die erste Fluorpolymerschicht in Kontakt sowohl mit dem Metallsubstrat als auch der zweiten Fluorpolymerschicht steht und wobei die Dicke gemäß der Querschnittsdickenmessung gemessen wird, wie im Beispielabschnitt offenbart, wobei die Anzahl von reaktiven Gruppen gemäß dem Endgruppen-Analyseverfahren gemessen wird, das in der Patentschrift offenbart ist, und wobei das Fluorpolymer der ersten Fluorpolymerschicht ausgewählt ist aus perfluorierten Fluorpolymeren und aus teilweise fluorierten Fluorpolymeren, wobei die teilweise fluorierten Polymere ausgewählt sind aus Copolymeren von Tetrafluorethylen (TEE) und Ethylen (E), Polyvinylidenfluorid (PVDF) und THV (Tetrafluorethylen-Hexafluorpropylen-Vinylidenfluorid-Copolymeren).

2. Der mehrschichtige Artikel nach Anspruch 1, wobei das Fluorpolymer der ersten Fluorpolymerschicht (a) -COX-Gruppen, worin X OH, ONa, OK, NH₂, F oder Cl ist; (b) - S(=O)₂X, worin X OH, ONa, OK, NH₂, F oder Cl ist; (c) -CH₂OSO₂Y, worin Y=OH, ONa oder OK ist; (d) -CH₂OH; (e) Phosphatgruppe und Kombinationen davon umfasst.

3. Der mehrschichtige Artikel nach einem der Ansprüche 1-2, wobei das Fluorpolymer der ersten der Fluorpolymerschicht ein fluoriertes Copolymer ist.

4. Der mehrschichtige Artikel nach einem der Ansprüche 1-2, wobei das Fluorpolymer der ersten Fluorpolymerschicht ein PTFE-Homopolymer ist.

5. Ein Verfahren zum Bilden einer Trennfläche auf einem Substrat, wobei das Verfahren umfasst:
Abgeben von Teilchen aus mindestens einem Fluidstrahl auf eine Metalloberfläche, um die Metalloberfläche mit einem Fluorpolymer zu imprägnieren, um eine erste Fluorpolymerschicht zu bilden, wobei die Teilchen ein Schleifteilchen und das Fluorpolymer umfassen;
Beschichten der ersten Fluorpolymerschicht mit einem zweiten Fluorpolymer, um eine zweite Fluorpolymerschicht zu bilden und dadurch einen mehrschichtigen Artikel zu bilden; und
Sintern des mehrschichtigen Artikels, um ein mit Trennfläche beschichtetes Substrat zu bilden; wobei das Fluorpolymer der ersten Fluorpolymerschicht, wenn es ein schmelzverarbeitbares Fluorpolymer ist, mindestens 30 reaktive Gruppen pro 1.000.000 Kohlenstoffatome umfasst, und das Fluorpolymer der ersten Fluorpolymerschicht, wenn es ein nicht schmelzverarbeitbares Fluorpolymer ist, mehr als 5 reaktive Gruppen pro 1.000.000 Kohlenstoffatome umfasst, und wobei das Fluorpolymer der ersten Fluorpolymerschicht ausgewählt ist aus perfluorierten Fluorpolymeren und aus teilweise fluorierten Fluorpolymeren, wobei die teilweise fluorierten Polymere ausgewählt sind aus Copolymeren von Tetrafluorethylen (TFE) und Ethylen (E), Polyvinylidenfluorid (PVDF) und THV (Tetrafluorethylen-Hexafluorpropylen-Vinylidenfluoridcopolymer).

6. Das Verfahren nach Anspruch 5, wobei die Teilchen ein Schleifteilchen und ein Fluorpolymerteilchen umfassen.

7. Das Verfahren nach Anspruch 5, wobei die Teilchen ein Schleifteilchen mit einer Außenoberfläche umfassen, die ein Fluorpolymer umfasst.

8. Das Verfahren nach einem der Ansprüche 5-7, wobei die Teilchen mit einem Gas an die Metalloberfläche abgegeben werden.

9. Das Verfahren nach einem der Ansprüche 5-8, wobei die Beschichtung mit dem zweiten Fluorpolymer eine Pulverbeschichtung oder eine Dispersionsbeschichtung ist.

10. Der mehrschichtige Artikel nach einem der Ansprüche 1-4, wobei das Metallsubstrat mindestens eines von Stahl, Stahl mit hohem Kohlenstoffgehalt, Edelstahl, aluminiertem Stahl, Aluminium und Aluminiumlegierungen umfasst.

11. Das Verfahren nach einem der Ansprüche 5-9, wobei das Schleifteilchen ausgewählt ist aus Siliciumdioxid, Aluminiumoxid, Zirkoniumoxid, Bariumtitanat, Calciumtitanat, Natriumtitanat, Titanoxid, Glas, biokompatiblem Glas, Diamant, Siliciumcarbid, Calciumphosphat, Calciumcarbonat, Metallpulvern, Kohlenstoff-Faserverbundwerkstoffen, polymeren Verbundstoffen, Titan, Edelstahl, gehärtetem Stahl, Kohlenstoffstahl-Chromlegierungen oder einer beliebigen Kombination davon.

## Revendications

1. Article multicouche comprenant :
(a) un substrat métallique ;
(b) une première couche de fluoropolymère ayant une épaisseur ne dépassant pas 10 micromètres, dans lequel la première couche de fluoropolymère est constituée essentiellement d'un fluoropolymère comprenant des groupes réactifs, dans lequel lorsque le fluoropolymère est un fluoropolymère apte à être travaillé il comprend au moins 30 groupes réactifs pour 1 000 000 atomes de carbone et lorsque le fluoropolymère est un fluoropolymère qui n'est pas apte à être travaillé il comprend plus de 5 groupes réactifs pour 1 000 000 atomes de carbone ; et
(c) une deuxième couche de fluoropolymère ayant une épaisseur d'environ 10 à 1 000 micromètres,
dans lequel la première couche de fluoropolymère est en contact avec le substrat métallique et la deuxième couche de fluoropolymère et dans lequel l'épaisseur est mesurée selon la méthode de mesure de l'épaisseur en coupe transversale telle que décrite dans la section des exemples, dans lequel le nombre de groupes réactifs est mesuré selon la méthode d'analyse des groupes terminaux décrite dans la spécification, et dans lequel le fluoropolymère de la première couche de fluoropolymère est choisi parmi des fluoropolymères perfluorés et des fluoropolymères partiellement fluorés dans lequel les polymères partiellement fluorés sont choisis parmi des copolymères de tétrafluoroéthylène (TFE) et d'éthylène (E), de fluorure de polyvinylidène (PVDF) et de THV (copolymères de fluorure de tétrafluoroéthylène-hexafluoropropylène-vinylidène).

2. Article multicouche selon la revendication 1, dans lequel le fluoropolymère de la première couche de fluoropolymère comprend (a) des groupes -COX, dans lequel X est OH, ONa, OK, NH₂, F, ou Cl ; (b) -S(=0)₂X où X est OH, ONa, OK, NH₂, F, ou Cl ; (c) -CH₂-OSO₂ Y où Y=OH, ONa, ou OK ; (d) -CH₂OH ; (e) groupe phosphate ; et des combinaisons de ceux-ci.

3. Article multicouche selon l'une quelconque des revendications 1 à 2, dans lequel le fluoropolymère de la première de couche de fluoropolymère est un copolymère fluoré.

4. Article multicouche selon l'une quelconque des revendications 1 à 2, dans lequel le fluoropolymère de la première couche de fluoropolymère est un homopolymère PTFE.

5. Procédé pour former une surface antiadhésive sur un substrat le procédé comprenant :
la fourniture de particules d'au moins un jet de fluide à une surface métallique pour imprégner la surface métallique avec un fluoropolymère pour former une première couche de fluoropolymère, dans lequel les particules comprennent une particule abrasive et le fluoropolymère ;
le revêtement de la première couche de fluoropolymère avec un second fluoropolymère pour former une seconde couche de fluoropolymère et la formation de ce fait d'un article multicouche ; et
le frittage de l'article multicouche pour former un substrat revêtu de surface antiadhésive ; dans lequel lorsque le fluoropolymère de la première couche de fluoropolymère est un fluoropolymère apte à être travaillé il comprend au moins 30 groupes réactifs pour 1 000 000 atomes de carbone et lorsque le fluoropolymère de la première couche de fluoropolymère est un fluoropolymère qui n'est pas apte à être travaillé il comprend plus de 5 groupes réactifs pour 1 000 000 atomes de carbone, et dans lequel le fluoropolymère de la première couche de fluoropolymère est choisi parmi des fluoropolymères perfluorés et des fluoropolymères partiellement fluorés dans lequel les polymères partiellement fluorés sont choisis parmi des copolymères de tétrafluoroéthylène (TFE) et d'éthylène (E), de fluorure de polyvinylidène (PVDF) et de THV (copolymère de fluorure de tétrafluoroéthylène-hexafluoropropylène-vinylidène).

6. Procédé selon la revendication 5, dans lequel les particules comprennent une particule abrasive et une particule de fluoropolymère.

7. Procédé selon la revendication 5, dans lequel les particules comprennent une particule abrasive ayant une surface externe comprenant un fluoropolymère.

8. Procédé selon l'une quelconque des revendications 5 à 7, dans lequel les particules sont distribuées à la surface métallique avec un gaz.

9. Procédé selon l'une quelconque des revendications 5 à 8, dans lequel le revêtement avec le deuxième fluoropolymère est un revêtement en poudre ou un revêtement de dispersion.

10. Article multicouche selon l'une quelconque des revendications 1 à 4, dans lequel le substrat métallique inclut au moins l'un de l'acier, de l'acier à haute teneur en carbone, de l'acier inoxydable, de l'acier aluminisé, de l'aluminium, et d'alliages d'aluminium.

11. Procédé selon l'une quelconque des revendications 5 à 9, dans lequel la particule abrasive est choisie parmi de la silice, de l'alumine, de la zircone, du titanate de baryum, du titanate de calcium, du titanate de sodium, de l'oxyde de titane, du verre, du verre biocompatible, du diamant, du carbure de silicium, du phosphate de calcium, du carbonate de calcium, des poudres métalliques, des composites de fibre de carbone, des composites polymères, du titane, de l'acier inoxydable, de l'acier durci, des alliages de chrome et d'acier au carbone, ou l'une quelconque des combinaisons de ceux-ci.
